# EUROPEAN PATENT APPLICATION

(11) **EP 4 775 656 A1**
(43) Date of publication of application: **15.07.2026**
(21) Application number: 24862691.3
(22) Date of filing: 29.08.2024
(51) Int. Cl.: C10M 169/06, C10M 101/02, C10M 115/08, C10M 135/18, C10M 159/24, F16D 3/205, C10N 10/02, C10N 10/12, C10N 30/06, C10N 40/04, C10N 50/10

(54) **GREASE COMPOSITION FOR CONSTANT VELOCITY JOINTS, AND CONSTANT VELOCITY JOINT HAVING SAME SEALED THEREIN**

(30) Priority: 05.09.2023 JP 2023143769
(71) Applicant: KYODO YUSHI CO., LTD., Fujisawa-shi, Kanagawa 251-8588 (JP)
(72) Inventor: TSUNODA, Junpei, Fujisawa-shi, Kanagawa 251-8588 (JP); OU, Yi-sheng, Fujisawa-shi, Kanagawa 251-8588 (JP)
(74) Representative: Cabinet Beau de Loménie
(86) International application number: PCT/JP2024/030949
(87) International publication number: WO 2025/053039

(57) **Abstract**

A grease composition for constant velocity joints comprising
(a) a base oil;
(b) a diurea-based thickener;
(c) molybdenum dialkyldithiocarbamate which is solid at 25°C;
(d) molybdenum dialkyldithiocarbamate which is liquid at 25°C;
(e) overbased calcium sulfonate; and
(f) zinc dialkyldithiocarbamate,
wherein the content of component (f) is 0.3 mass% to 3.5 mass% based on the total mass of the composition.

## Description

### Technical Field

The present invention relates to a grease composition for constant velocity joints and a constant velocity joint having the same sealed therein.

### Background Art

In automobiles, Front Engine Front Drive (FF) vehicles have become widely popular from the viewpoints of weight reduction aimed at environmental measures (CO2 reduction) of vehicles and securing of living space, and constant velocity joints (CVJ), which are indispensable for power transmission of FF vehicles, are used.

Since the CVJ is a device that transmits rotation between two shafts rotating in an angled state, components perform complicated rolling and sliding motions within the joint. Among CVJs, a plunging type CVJ also has a sliding mechanism in an axial direction; therefore, slide resistance in the axial direction occurs due to friction of internal components, and when this slide resistance is large, it may cause vibration or noise. Incidentally, vehicle characteristics regarding these vibrations and sounds are generally called NV characteristics (N is an acronym for noise, and V is an acronym for vibration).

In recent automobiles, electrification of power sources aimed at realization of carbon neutrality and low fuel consumption is being promoted, and quietness inside the vehicle is remarkably improved. From the above, compared to conventional vehicles equipped with internal combustion engines, required performance against abnormal noise and vibration is becoming higher, and requirements regarding NV characteristics required for plunging type constant velocity joints are also becoming severe.

Furthermore, accompanying the circulation of HEVs, PHEVs, and BEVs to the general market, the environment is becoming one where low torque driving conditions due to generalization of energy-saving driving and high torque driving conditions during acceleration due to motor mounting are intermixed. From the above, a surface pressure environment surrounding the plunging type constant velocity joint ranges widely from a low surface pressure condition due to energy-saving driving input to a high surface pressure condition due to input during motor acceleration, compared to vehicles equipped with internal combustion engines; thus, a decrease in NV characteristics due to an increase in internal friction accompanying a change in a lubrication environment of a sliding portion may become a problem. An increase in slide resistance, which is a main factor of the decrease in NV characteristics, is caused by the increase in internal friction, and friction reduction under a wide range of surface pressure conditions becomes a countermeasure technique.

In order to solve these problems, structural improvement of the CVJ itself has also been made, but problems in terms of cost are large, and a grease excellent in low friction properties under a wide range of surface pressure conditions has come to be required.

As a grease excellent in vibration suppression of a CVJ, a grease for a constant velocity joint formed by using a base oil and a urea grease in combination with additives of molybdenum dithiocarbamate and molybdenum dithiophosphate, or by using a base oil and a urea grease into which zinc dithiophosphate is mixed together with these organic molybdenum compounds (see Patent Literature 1), and a composition for a constant velocity joint containing a base oil, a diurea-based thickener, molybdenum dialkyldithiocarbamate sulfide, zinc sulfonate, a sulfur-phosphorus-based extreme pressure agent, and vegetable oil/fat (see Patent Literature 2) have also been proposed.

Moreover, as a grease considering wear of a lubricated portion in addition to vibration suppression performance, a grease composition for a constant velocity joint comprising a base oil and a thickener but being free from a trinuclear molybdenum compound consisting of montan wax, zinc sulfonate, and molybdenum dialkyldithiocarbamate sulfide (see Patent Literature 3) has been proposed.

### [Citation List]

### [Patent Literatures]

Patent Literature 1: Japanese Examined Patent Application Publication No. Hei 5-79280
Patent Literature 2: Japanese Unexamined Patent Application Publication No. 2011-37650
Patent Literature 3: Japanese Patent No. 6248939

### Summary of Invention

### Problems to be solved by the invention

Thus, NV characteristics have been studied for CVJ grease compositions so far, but NV characteristics under a wide range of surface pressure conditions considering electrification of vehicles cannot be said to have been sufficiently studied.

Therefore, it is an object of the present invention to provide a grease composition for constant velocity joints showing low friction properties even under low surface pressure and high surface pressure conditions, and a constant velocity joint having the same sealed therein.

### Means for solution of the problems

1. A grease composition for constant velocity joints, comprising
   (a) a base oil;
   (b) a diurea-based thickener;
   (c) molybdenum dialkyldithiocarbamate which is solid at 25°C;
   (d) molybdenum dialkyldithiocarbamate which is liquid at 25°C;
   (e) overbased calcium sulfonate; and
   (f) zinc dialkyldithiocarbamate,
   wherein the content of component (f) is 0.3 mass% to 3.5 mass% based on the total mass of the composition.
2. The grease composition for constant velocity joints according to the above 1, wherein the content of component (e) is 0.5 mass% to 8.5 mass% based on the total mass of the composition.
3. The grease composition for constant velocity joints according to the above 1 or 2, wherein the content of component (d) is 0.3 mass% to 7.0 mass% based on the total mass of the composition.
4. The grease composition for constant velocity joints according to any one of the above 1 to 3, wherein the content of component (c) is 0.2 mass% to 4.0 mass% based on the total mass of the composition.
5. The grease composition for constant velocity joints according to any one of the above 1 to 4, further comprising component (g) a sulfur-based extreme pressure agent.
6. The grease composition for constant velocity joints according to any one of the above 1 to 5, wherein component (b) is at least one selected from the group consisting of diurea compounds represented by the following formula (1-1), (1-2), or (1-3): 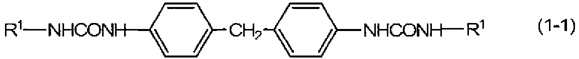 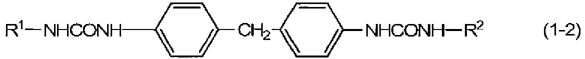 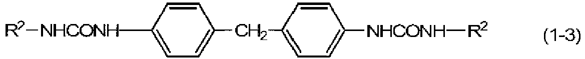 wherein R¹ is a cycloalkyl group having 6 to 12 carbon atoms, and R² is an alkyl group having 6 to 30 carbon atoms.
7. The grease composition for constant velocity joints according to any one of the above 1 to 6, wherein component (a) contains a large proportion of mineral oil.
8. The grease for constant velocity joints according to any one of the above 1 to 7, which is for a sliding type constant velocity joint.
9. A tripod type sliding constant velocity joint having the grease composition for constant velocity joints according to any one of the above 1 to 7 sealed therein.

### Advantageous Effects of Invention

According to the present invention, it is possible to provide a grease composition for constant velocity joints excellent in low friction characteristics even under wide surface pressure conditions from low surface pressure to high surface pressure. Further, according to the present invention, it is possible to provide a constant velocity joint having sealed therein a grease composition excellent in low friction characteristics even under wide surface pressure conditions from low surface pressure to high surface pressure.

### Description of Embodiments

### (a) Base oil

In the present invention, the type of the base oil affects the inflow properties of grease to a lubricated portion or oil film formation characteristics, but is considered to hardly affect the low friction characteristics in the present invention. Therefore, the type of base oil usable in the present invention is not particularly limited, and mineral oil, synthetic oil, or a mixed oil thereof can be used. Examples of the mineral oil include paraffinic mineral oil and naphthenic mineral oil. Examples of the synthetic oil include hydrocarbon-based synthetic oils such as poly-alpha-olefin, ether-based synthetic oils represented by alkyldiphenyl ether, and the like. Note that the synthetic oil may be a so-called biomass oil produced using biological resources derived from animals and plants, etc. as a raw material. For example, biomass ester oil synthesized from various fatty acids derived from vegetable oil and alcohols, or biomass hydrocarbon oil using vegetable oil such as palm oil, corn oil, or soybean oil can also be used. As the base oil of the present invention, it is preferable to use mineral oil from the viewpoint of cost. It is preferable that the base oil contains a large proportion of mineral oil; for example, if it is 15 mass% or more based on the total mass of the base oil, it is effective for cost reduction.

The kinematic viscosity at 100°C of the base oil of the present invention is preferably 6 to 25 mm²/s, more preferably 8 to 20 mm²/s, and further preferably 10 to 15 mm²/s, from the viewpoint of oil film formation characteristics. Thereby, since an oil film of appropriate thickness can be formed, a grease composition excellent in durability (peeling resistance) required for grease for CVJ is obtained.

The content of the base oil in the composition of the present invention is preferably 57 to 93 mass%, more preferably 63 to 90 mass%, and further preferably 68 to 88 mass% based on the total mass of the composition. By containing the base oil in such a range, the grease composition of the present invention is provided with inflow properties, and as a result, excellent low friction properties can be exhibited at the lubricated portion.

### (b) Thickener

The thickener of the present invention is a diurea-based thickener. Since the diurea-based thickener is easily softened at an early stage by shearing, grease can be sufficiently supplied to the sliding portion in the CVJ.

Generally, diurea-based thickeners are classified into aliphatic diurea-based thickeners, alicyclic diurea-based thickeners, alicyclic-aliphatic diurea-based thickeners, aromatic diurea-based thickeners, and the like, depending on the type of monoamine that is a raw material of the diurea compound. In the present invention, the type or structure of the diurea-based thickener affects grease fluidity, but is considered to hardly affect the low friction characteristics in the present invention. Therefore, the diurea-based thickener used in the present invention is not particularly restricted.

As the diurea-based thickener of the present invention, it is preferably at least one selected from the group consisting of diurea compounds represented by the following formula (1-1), (1-2), or (1-3).

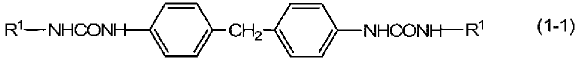

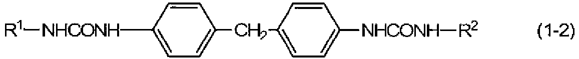

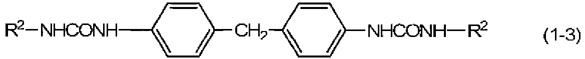

In the formula, R¹ is a cycloalkyl group having 6 to 12 carbon atoms, preferably 6 to 7 carbon atoms, and more preferably a cyclohexyl group.

R² is an alkyl group having 6 to 30 carbon atoms, preferably 8 to 20 carbon atoms, and more preferably 8 to 18 carbon atoms.

As the thickener of the present invention, a so-called alicyclic-aliphatic diurea-based thickener, which is a mixture of the diurea compound of the above formula (1-1), the diurea compound of the above formula (1-2), and the diurea compound of the above formula (1-3), is preferable. By using the alicyclic-aliphatic diurea-based thickener as the thickener of the present invention, excellent fluidity is obtained, and grease supply to the sliding portion in the CVJ becomes easy.

Particularly, an alicyclic-aliphatic diurea-based thickener in which R¹ is a cyclohexyl group and R² is an alkyl group having 18 carbon atoms is preferable.

The content of the thickener is preferably an amount capable of adjusting the consistency of the grease composition of the present invention to preferably 310 to 340, and specifically, it is preferably 5 to 13 mass%, more preferably 6 to 12 mass%, and further preferably 7 to 11 mass% based on the total mass of the composition. When the consistency of the grease composition of the present invention is 310 to 340, excellent fluidity is obtained, and grease supply to the sliding portion in the CVJ becomes easy. In the present specification, "consistency" means 60-stroke worked consistency measured by JIS K 2220 7.

### (c) Molybdenum dialkyldithiocarbamate which is solid at 25°C

### (d) Molybdenum dialkyldithiocarbamate which is liquid at 25°C

Molybdenum dialkyldithiocarbamate (MoDTC) usable as (c) or (d) of the present invention is a general term for those in which the metal group is molybdenum among organometallic load-carrying additives, and is generally widely used as a friction modifier. (Note that MoDTC is sometimes classified as an extreme pressure agent, but in recent years, it is often classified as a friction modifier.) In MoDTC, a non-oil-soluble type (that is, solid at 25°C) and an oil-soluble type (that is, liquid at 25°C) exist. By using non-oil-soluble MoDTC and oil-soluble MoDTC in combination, a stable low friction film is formed, and excellent low friction characteristics are obtained in a wide range from low surface pressure to high surface pressure.

Preferable examples of MoDTC include compounds represented by formula (2).

[R³R⁴N-CS-S]₂-Mo₂OₘSₙ (2)

In formula (2), R³ and R⁴ may be the same as or different from each other, and each independently represents a linear or branched alkyl group having 1 to 24 carbon atoms, preferably 3 to 18 carbon atoms, m is 0 to 3, n is 4 to 1, and m+n=4.

MoDTC is essential for exhibiting low friction properties, but since it is an expensive additive, its content needs to be determined considering compatibility between low friction characteristics and cost.

The content of component (c) is preferably 0.2 to 4.0 mass%, more preferably 0.3 to 3.0 mass%, and further preferably 0.4 to 2.5 mass% based on the total mass of the composition, from the viewpoint of low friction characteristics and cost.

The content of component (d) is preferably 0.3 to 7.0 mass%, more preferably 0.8 to 6.0 mass%, and further preferably 1.0 to 5.0 mass% based on the total mass of the composition, from the viewpoint of low friction characteristics and cost. Components (c) and (d) exhibit particularly excellent low friction properties in this range.

### (e) Overbased calcium sulfonate

The calcium sulfonate used in the present invention is one made overbased with calcium carbonate, and excellent low friction properties cannot be obtained with neutral calcium sulfonate. Also, sodium, magnesium, barium, etc. are mentioned as metal components of metal sulfonates, but in order to obtain low friction properties under a wide range of surface pressure from low surface pressure to high surface pressure, it is essential that the metal component is calcium.

As the overbased calcium sulfonate, those having a base number of 200 to 500 mg KOH/g are preferable, those having 300 to 470 mg KOH/g are more preferable, and those having 350 to 450 mg KOH/g are further preferable. In such a range, satisfactory low friction properties can be obtained.

Note that the base number in the present invention is a value measured according to ASTM D-2896.

The content of the overbased calcium sulfonate is preferably 0.5 to 8.5 mass% from the viewpoint of low friction properties, preferably 1.0 to 7.0 mass% when considering compatibility between low friction properties and cost, and more preferably 1.5 to 6.0 mass%, based on the total amount of the composition.

### (f) Zinc dialkyldithiocarbamate

As the zinc dialkyldithiocarbamate (ZnDTC) used in the present invention, those represented by formula (3) are preferable.

[R⁵₂N-CS-S]₂-Zn (3)

The alkyl group structure of ZnDTC hardly affects the low friction properties in the present invention, but in formula (3), R⁵ is preferably a primary or secondary alkyl group having 1 to 24 carbon atoms, and more preferably an alkyl group having 3 to 8 carbon atoms.

If ZnDTC is contained excessively, it may cause an increase in friction due to corrosion of the lubricated portion (the lubricated portion of CVJ is made of metal). Therefore, in order to prevent friction increase due to corrosion while ensuring low friction properties (particularly, low friction properties under low surface pressure), the content of ZnDTC is 0.3 mass% to 3.5 mass%, preferably 0.5 to 3.0 mass%, and more preferably 0.7 to 2.5 mass% based on the total mass of the composition.

The composition of the present invention may contain additives generally used in grease as necessary, in addition to components (a) to (f).

### (g) Sulfur-based extreme pressure agent

Examples of the sulfur-based extreme pressure agent usable in the present invention include sulfurized fats and oils obtained by sulfurizing animal and vegetable oils such as castor oil, rapeseed oil, and beef tallow, sulfurized esters, sulfurized olefins obtained by sulfurizing olefins, and polysulfides.

From the viewpoint of low friction properties in the present invention, the sulfur-based extreme pressure agent does not necessarily have to be contained, but when considering extreme pressure properties, it is preferable to contain sulfurized olefin, and among them, it is more preferable to contain sulfurized olefin having a sulfur content of 35 to 50 mass%. Note that the sulfur content in the present invention is a value measured according to JIS K 2541.

Incidentally, excessive inclusion of the sulfur-based extreme pressure agent may become a factor of friction increase due to corrosion of the lubricated portion. The content considering low friction properties and extreme pressure properties is preferably 0.3 to 1.5 mass%, more preferably 0.3 to 1.2 mass%, and further preferably 0.3 to 1.0 mass% based on the total mass of the composition. In this range, low friction properties and excellent extreme pressure properties can be obtained.

Examples of optional additives other than the sulfur-based extreme pressure agent include solid lubricants, antioxidants, rust inhibitors, extreme pressure agents, and oiliness agents.

Examples of the solid lubricant include molybdenum disulfide, earthy graphite, flaky graphite, carbon black, boron nitride, potassium borate, calcium carbonate, and the like, and examples of organic substances include melamine cyanurate, polytetrafluoroethylene, copper salts and iron salts of dithiocarbamic acid, calcium salts, aluminum salts, sodium salts and lithium salts of stearic acid and sebacic acid.

Examples of the antioxidant include amine-based, phenol-based, quinoline-based, sulfur-based ones, and the like.

Examples of the rust inhibitor include zinc-based, carboxylic acid-based, carboxylate (for example, dibasic acid salts such as sodium sebacate), amine-based ones, and the like.

Examples of the extreme pressure agent include phosphoric acid esters such as triphenyl phosphate, triaryl phosphate, and tricresyl phosphate, azole compounds such as benzotriazole and dialkylmercaptothiadiazole, fatty acids obtained by decomposing and modifying fats and oils obtained from animals and plants, polyhydric alcohols such as mono/diglycerides and glycerin, alkyd resins, hydrogenated oils, chlorinated fats and oils, thiophosphoric acid, and the like.

Examples of the oiliness agent include fats and oils such as beef tallow, lard, fish oil, castor oil, palm oil, soybean oil, and rapeseed oil obtained from animals and plants, esters such as trimethylolpropane oleate, pentaerythritol stearate, dioctyl sebacate, dioctyl adipate, dioctyl phthalate, and dibutyl phthalate, higher alcohols such as cetyl alcohol, stearyl alcohol, and oleyl alcohol, ester waxes based on montanic acid obtained by refining and oxidizing lignite as a raw material, and the like.

The content of these optional additives is, for example, 0.1 to 5.0 mass%, preferably 0.3 to 4.0 mass%, and more preferably 0.5 to 3.5 mass% based on the total mass of the composition.

It goes without saying that the grease composition of the present invention exhibits its performance most effectively when used as a grease composition for constant velocity joints, but it exhibits performance more effectively when used for a sliding type constant velocity joint (that is, plunging type constant velocity joint), and exhibits performance even more effectively when used for a tripod type sliding constant velocity joint among sliding type constant velocity joints.

### Examples

Using the following components, grease compositions of Examples and Comparative Examples were prepared. Specifically, 1 mole of 4',4-diphenylmethane diisocyanate and 2 moles of predetermined amines were reacted in a base oil, and after heating and cooling, the mixture was kneaded with a three-roll mill to obtain a base grease. Additives were blended therein in proportions shown in Table 1 or Table 2 (numbers in the tables are mass% based on the total mass of the composition unless otherwise specified), and base oil was further added so as to achieve the thickener amount shown in Table 1 or Table 2, and by dispersing with a three-roll mill, grease compositions of Examples and Comparative Examples were obtained. The consistency was measured according to JIS K2220 7. and unified to 325.

### <Base oil>

### * Mineral oil (Kinematic viscosity at 100°C = 12.44 mm²/s)

### <Thickener>

* As the thickener, a diurea-based thickener obtained using cyclohexylamine and octadecylamine (cyclohexylamine:octadecylamine = 9:1, molar ratio) as amines was used.

### <Additives>

### * MoDTC (Solid): Solid molybdenum dialkyldithiocarbamate

### (Adeka Sakura-Lube 600, manufactured by ADEKA)

A compound in which R³ and R⁴ in formula (2) are linear alkyl groups having 4 carbon atoms, m is 2, and n is 2.

### * MoDTC (Liquid): Liquid molybdenum dialkyldithiocarbamate

### (Adeka Sakura-Lube 525, manufactured by ADEKA)

A mixture of a compound in which R³ and R⁴ in formula (2) are 2-ethylhexyl, m is 2, and n is 2, and a compound in which R³ and R⁴ in formula (2) are isotridecane, m is 2, and n is 2.
* Overbased Ca Sulfonate: Overbased calcium sulfonate
   (Bryton C-400CKY, manufactured by Lanxess, Base Number = 405 mg KOH/g)
* Neutral Ca Sulfonate: Neutral calcium sulfonate
   (ALOX 2292B, manufactured by Lubrizol, TBN = 2.5 mg KOH/g)
* ZnDTC: Zinc dialkyldithiocarbamate
   (VANLUBE AZ, manufactured by R.T. VANDERBILT)
* S-based Extreme Pressure Agent: Sulfurized olefin
   (ANGLAMOL 33, manufactured by Lubrizol, S amount 43.0%)
* Wax: Montan wax
   (LICOWAX E, manufactured by Clariant Japan)
* Zn Sulfonate: Zinc sulfonate
   (NA-SUL ZS, manufactured by KING INDUSTRIES)

Each grease composition of Examples and Comparative Examples was tested by the following method. Test results of Examples are shown in Table 1, and test results of Comparative Examples are shown in Table 2. Note that Comparative Example 8 corresponds to Example 1 of Patent No. 6248939.

### <Evaluation of SRV Test>

Pass only if results in both conditions of (1) high surface pressure condition and (2) low surface pressure condition are △ or better.

Note that this condition is a condition assuming general sliding type constant velocity joints.

### <(1) Evaluation of NV characteristics under high surface pressure condition>

The arithmetic mean of friction coefficients for 10 seconds from 1790 seconds to 1800 seconds from the start of the test was determined and comparatively evaluated.

### * Test conditions

Surface pressure: 2.2 GPa
Stroke: 3.6 mm
Frequency: 4.3 Hz
Test time: 1800 seconds
Test temperature: 40°C
Ball: 17.5 mm
Plate: Surface roughness Rz = 5.0 µm

### [Evaluation]

O (Pass): < 0.045
△ (Pass): 0.045 to 0.055
× (Fail): > 0.055

### <(2) Evaluation of NV characteristics under low surface pressure condition>

The arithmetic mean of friction coefficients for 10 seconds from 590 seconds to 600 seconds from the start of the test was determined and comparatively evaluated.

### * Test conditions

Surface pressure: 0.15 GPa
Stroke: 1.5 mm
Frequency: 33 Hz
Test time: 600 seconds
Test temperature: 50°C
Roller bearing: φ15 × 22 mm
Plate: Surface roughness Rz = 1.5 µm

### [Evaluation]

O (Pass): < 0.088
△ (Pass): 0.088 to 0.095
× (Fail): > 0.095

**Table 1**

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Thickener | (b) Alicyclic-aliphatic diurea | 9 | 9 | 9 | 9 | 9 | 9 | 9 | 9 | 9 | 9 | 9 |
| Base oil | (a) Mineral oil | Balance | Balance | Balance | Balance | Balance | Balance | Balance | Balance | Balance | Balance | Balance |
| | Kinematic viscosity at 100°C (mm2/s) | 12.44 | 12.44 | 12.44 | 12.44 | 12.44 | 12.44 | 12.44 | 12.44 | 12.44 | 12.44 | 12.44 |
| Additives | (c) MoDTC (Solid) | 0.7 | 0.7 | 0.7 | 0.3 | 3.0 | 0.7 | 0.7 | 0.7 | 0.7 | 0.7 | 0.7 |
| | (d) MoDTC (Liquid) | 1.6 | 0.8 | 6.0 | 1.6 | 1.6 | 1.6 | 1.6 | 1.6 | 1.6 | 1.6 | 1.6 |
| | (e) Overbased Ca sulfonate | 3.0 | 3.0 | 3.0 | 3.0 | 3.0 | 1.0 | 6.0 | 8.0 | 3.0 | 3.0 | 3.0 |
| | Neutral Ca sulfonate | | | | | | | | | | | |
| | (f) ZnDTC | 1.0 | 1.0 | 1.0 | 1.0 | 1.0 | 1.0 | 1.0 | 1.0 | 0.5 | 3.0 | 1.0 |
| | Sulfurized olefin | 0.5 | 0.5 | 0.5 | 0.5 | 0.5 | 0.5 | 0.5 | 0.5 | 0.5 | 0.5 | |
| | Wax | | | | | | | | | | | |
| | Zn sulfonate | | | | | | | | | | | |
| SRV test results | (1) High surface pressure condition | ○ | Δ | ○ | Δ | ○ | ○ | ○ | ○ | ○ | Δ | ○ |
| | (2) Low surface pressure condition | ○ | ○ | ○ | ○ | ○ | ○ | Δ | Δ | ○ | ○ | Δ |
| Judgment | | ○ | ○ | ○ | ○ | ○ | ○ | ○ | ○ | ○ | ○ | ○ |

**Table 2**

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Thickener | (b) Alicyclic-aliphatic diurea | 9 | 9 | 9 | 9 | 9 | 9 | 9 | 9 |
| Base oil | (a) Mineral oil | Balance | Balance | Balance | Balance | Balance | Balance | Balance | Balance |
| | Kinematic viscosity at 100°C (mm2/s) | 12.44 | 12.44 | 12.44 | 12.44 | 12.44 | 12.44 | 12.44 | 12.44 |
| Additives | (c) MoDTC (Solid) | 0.7 | 3.0 | | 0.7 | 0.7 | 0.7 | 0.7 | 2.0 |
| | (d) MoDTC (Liquid) | | | 1.6 | 1.6 | 1.6 | 1.6 | 1.6 | |
| | (e) Overbased Ca sulfonate | 3.0 | 3.0 | 3.0 | | | 3.0 | 3.0 | |
| | Neutral Ca sulfonate | | | | | 3.0 | | | |
| | (f) ZnDTC | 1.0 | 1.0 | 1.0 | 1.0 | 1.0 | | 4.0 | |
| | Sulfurized olefin | 0.5 | 0.5 | 0.5 | 0.5 | 0.5 | 0.5 | 0.5 | |
| | Wax | | | | | | | | 3.0 |
| | Zn sulfonate | | | | | | | | 1.0 |
| SRV test results | (1) High surface pressure condition | × | × | × | × | × | ○ | × | × |
| | (2) Low surface pressure condition | - | - | - | - | - | × | - | × |
| Judgment | | × | × | × | × | × | × | × | × |

## Claims

1. A grease composition for constant velocity joints, comprising
(a) a base oil;
(b) a diurea-based thickener;
(c) molybdenum dialkyldithiocarbamate which is solid at 25°C;
(d) molybdenum dialkyldithiocarbamate which is liquid at 25°C;
(e) overbased calcium sulfonate; and
(f) zinc dialkyldithiocarbamate,
wherein the content of component (f) is 0.3 mass% to 3.5 mass% based on the total mass of the composition.

2. The grease composition for constant velocity joints according to claim 1, wherein the content of component (e) is 0.5 mass% to 8.5 mass% based on the total mass of the composition.

3. The grease composition for constant velocity joints according to claim 1, wherein the content of component (d) is 0.3 mass% to 7.0 mass% based on the total mass of the composition.

4. The grease composition for constant velocity joints according to claim 1, wherein the content of component (c) is 0.2 mass% to 4.0 mass% based on the total mass of the composition.

5. The grease composition for constant velocity joints according to claim 1, further comprising component (g) a sulfur-based extreme pressure agent.

6. The grease composition for constant velocity joints according to claim 1, wherein component (b) is at least one selected from the group consisting of diurea compounds represented by the following formula (1-1), (1-2), or (1-3): 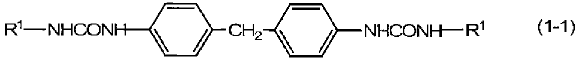 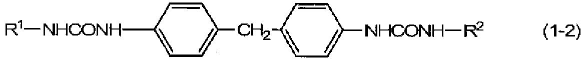 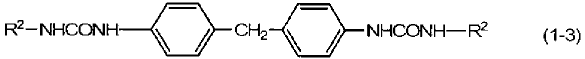 wherein R¹ is a cycloalkyl group having 6 to 12 carbon atoms, and R² is an alkyl group having 6 to 30 carbon atoms.

7. The grease composition for constant velocity joints according to claim 1, wherein component (a) contains a large proportion of mineral oil.

8. The grease for constant velocity joints according to any one of claims 1 to 7, which is for a sliding type constant velocity joint.

9. A tripod type sliding constant velocity joint having the grease composition for constant velocity joints according to any one of claims 1 to 7 sealed therein.
